Europäisches Patentamt

European Patent Office

Office européen des brevets

(11) Publication number: **0 190 735**
**A2**

(12) # EUROPEAN PATENT APPLICATION

(21) Application number: **86101454.6**

(22) Date of filing: **05.02.86**

(51) Int. Cl.⁴: **B 60 J 11/00**

(30) Priority: **08.02.85 IT 250285**
**10.01.86 IT 250186**

(43) Date of publication of application:
**13.08.86 Bulletin 86/33**

(84) Designated Contracting States:
**AT DE FR GB SE**

(71) Applicant: **Gorza, Luigi**
**Via Dante Alighieri, 12**
**I-32032 Feltre (Belluno)(IT)**

(72) Inventor: **Gorza, Luigi**
**Via Dante Alighieri, 12**
**I-32032 Feltre (Belluno)(IT)**

(74) Representative: **de Dominicis, Riccardo et al,**
**de Dominicis & Partners S.a.s. Via Brera, 6**
**I-20121 Milano(IT)**

(54) A weather protection covering device for truck driver's cabs.

(57) A weather protection covering device for truck driver's cabs comprises a box-type case (2, 3) being attachable to a vehicle cab roof (10) and accommodating, at each of its peripheral sides (5, 6, 7, 17, 18, 19) corresponding to the vehichle cab sides to be covered, a sheet carrier shaft (23, 24, 25) supporting a respective sheet (26, 27, 28).

Associated with each sheet carrier shaft (23, 24, 25) is an individiual gear motor (23a, 24a, 25a) for taking up and paying off the respective sheet (26, 27, 28), such gear motors (23a, 24a, 25a) being powered by the vehicle own battery through electric components (41) to be operated by the driver.

The covering sheets (26, 27, 28) are provided with band segments (28d, 28e, 28b) of the press-down/pull-open type which afford both proper folding of projecting flaps (28b, 28e) of the forward sheet (28) and releasable attachement of said flaps (28b, 28c) to side sheets (26, 27) in order to form a continuous protective enclosure.

Fig. 12

GORZA Luigi
Via Dante Alighieri, 12
32032 Feltre (Belluno), Italy

0190735

"A WEATHER PROTECTION COVERING DEVICE FOR TRUCK DRIVER'S CABS"

## BACKGROUND OF THE INVENTION

This invention relates to a weather protection covering device for truck driver's cabs.

Tailored sheets are currently available for protecting motor cars left in the open which are usually made of plastics and fit over the bodies of motor cars to protect them against weather agents, such as snow, sun radiation, and the like. After use, the tailored sheets are taken off the vehicle, folded up, and stowed in the vehicle luggage compartment. The sheet installation and removal operations pose no special difficulties in fair weather conditions, but become awkward and inconvenient to carry out in bad weather conditions, such as rain, snowfalls, etc.

Vehicles parked in the open air unprotected are obviously subjected to the detrimental effects of weather exposure. Also known is that in a situation of white frost or snow, at least the windows of a vehicle require to be wiped clean before operation to remove such frost, snow, and the like layers. While with motor cars such problems can be obviated, albeit at some expense, by keeping them in the shelter or a garage, these alternatives are practically denied to trucks, articulated buses, and the like. These have at present no weather protection arrangements available.

## SUMMARY OF THE INVENTION

It is a primary object of this invention to provide a weather protection covering device for vehicles, in particular for the driver's cab of a truck, which can be installed removably on a vehicle and protect it against weather agents, the covering sheets being in their paid-off state associable with one another to form a continuous awning for the sides to be protected, said sheets being adapted to be paid off and taken up both automatically and manually.

Another object of this invention is to provide a weather protection covering device which, when not actually in use, has a particularly streamlined configuration which is both compact and adapted to provide support for other elements customarily to be found on the roof of a truck driver's cab, such as spoilers and the like.

A further object is to arrange for the overall design of the inventive device to interfere with neither the free operation of ventilation hatches conventionally present on the roof of a truck driver's cab nor the layout of the horizontal top section of the engine exhaust pipe, or for that matter, any piping mounted on a truck driver's cab roof.

It is yet another object to arrange for this device to have a specially rigid construction, to both afford true operation of its rotary shafts and its utilization as a roof rack type of luggage carrier.

These and other objects to become apparent hereinafter are achieved by a weather protection covering device which is characterized in that it comprises:

i. a box-type housing and supporting structure removably attachable to a driver's cab roof;

ii. for each of the three cab sides to be covered, a sheet carrier shaft, said shaft being supported on said box-type structure, carrying a covering sheet and being associated with a respective reversible gear motor powered by the vehicle battery and being associated with known manually controlled circuit components for operating the gear motor in a desired direction of rotation and for turning it off;

iii. travel limit means adapted to automatically stop the covering sheets at their end take-up and pay-off positions;

iv. removable association means between said covering sheets, to connect together said paid-off sheets so as to form a protective enclosure, that is to undo said protective enclosure into its individual sheets for taking them up;

v. means of fastening releasably said covering sheets at their selected positions for securing them to the vehicle body, that is for their detachment from the vehicle body and subsequent taking up.

According to the invention, the box-type structure is formed of a base part and a cover part. The base part is substantially plate-like with a middle region in the form of plural shelves and a channel-like depression along the three consecutive sides which correspond to the three cab sides to be covered, and the cover part, being also provided with a substantially inverted channel-like cross-sectional shape, has a U-like plan shape, that is covering said channel depression along three sides of the base part.

The flange-shaped outer peripheral side of the cover part is spaced apart from the associated inner peripheral side, also flange-shaped, of the base part so as to form an interspace for accommodating and letting the covering sheets through. Connection of the base part to the cover part is accomplished by means of screws, preferably with the interposition of an elastic gasket.

According to the invention, the base and cover parts of the box-type structure are made with strengthening ribs. Of preference, such parts are formed from reinforced plastics, such as glass fiber reinforced plastics, or from sheet metal, in a single piece.

The sheet carrier shafts are supported on the base part of the box-type casing by means of simple end bearings. Associated with each sheet carrier shaft is a separate gear motor, the same also having a fitting for connection to a hand-operated tool of the wrench type for manual emergency operation of said gear motor in the event of battery failure.

According to the invention, the travel limit means for the sheets consists of small end plates arranged to cooperate in juxtaposition with a respective electromagnetic circuit component , known per se, which is affixed to the box-type structure and can stop the associated gear motor. For removable connection between sheets, there are used press-down/pull open band segments, that is Velcro type band segments.

To secure the sheets to the vehicle body, hook elements are provided which are preferably spring-loaded or elastic elements.

The box-type structure is provided, along its inner contour edge close to the cover part, with a preferably metal frame for supporting a spoiler or the like. Proper positioning of the bands during their paying-off and taking-up movements is ensured by guide moldings associated with the channel-like sides of the box-type structure base part.

BRIEF DESCRIPTION OF THE DRAWINGS

Further features, advantages, and details of the weather protection covering device of this invention will be more clearly apparent from the following description, with reference to the accompanying drawings, that show a preferred embodiment of the invention and a variation thereof for motor cars and where:

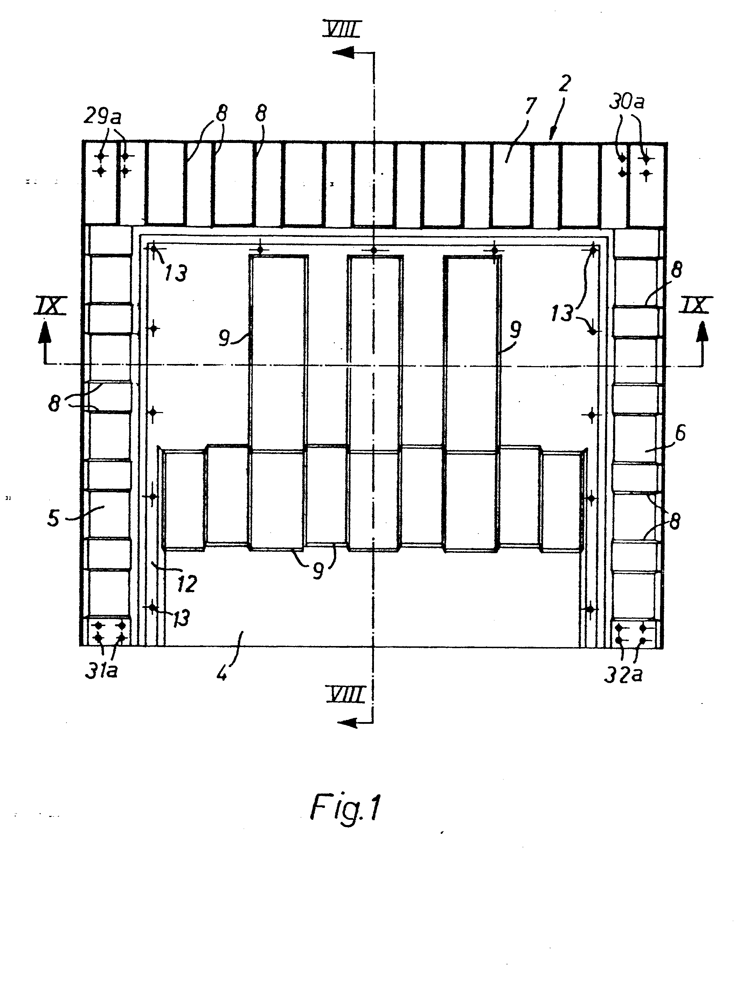

Figure 1 is a plan view of the base part of the box-type structure according to the invention;

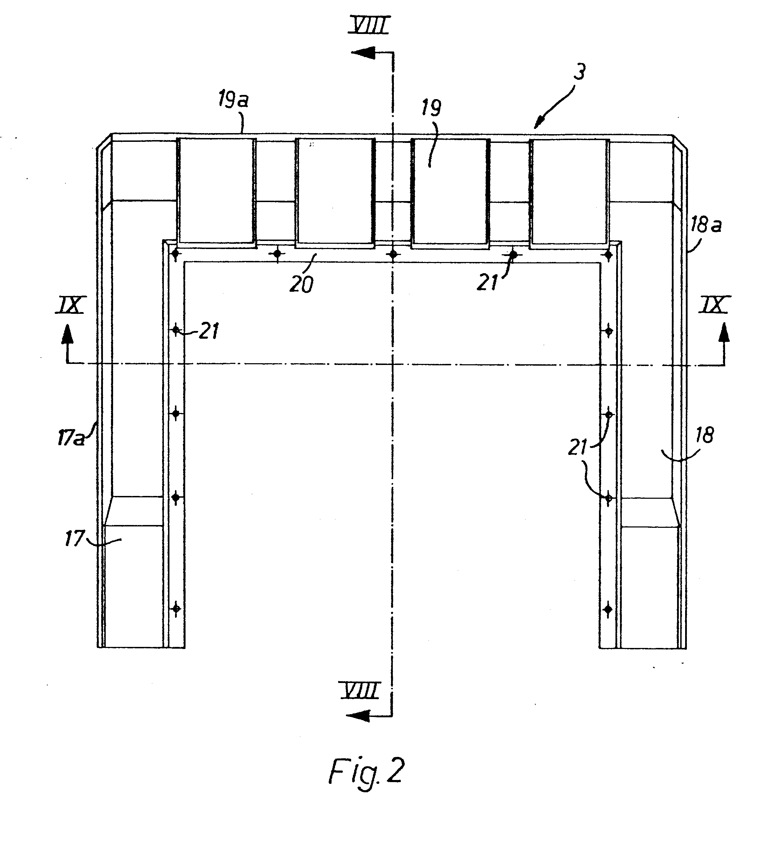

Figure 2 is a plan view of the cover part of the box-type structure according to the invention;

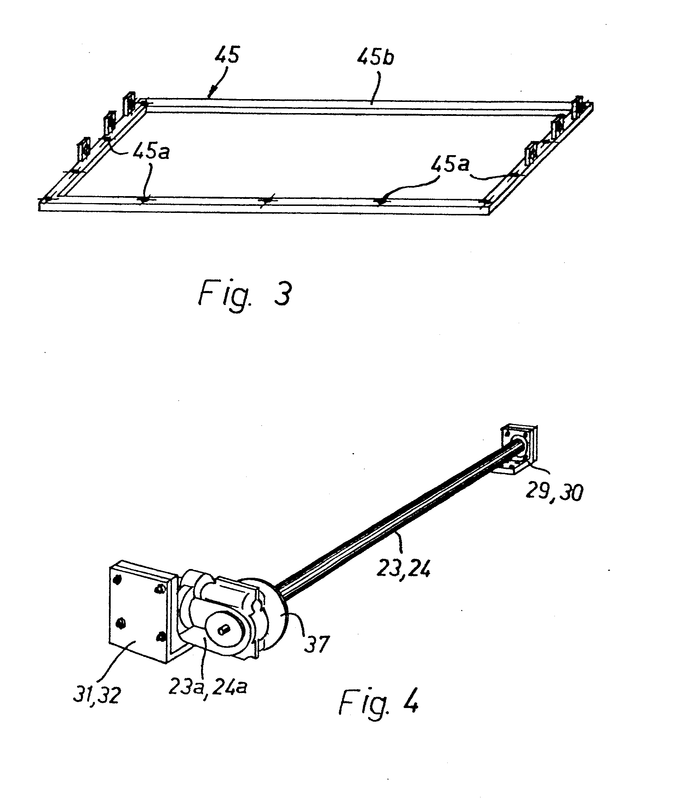

Figure 3 is a perspective view of a supporting frame housed within the box-type structure;

Figure 4 is a perspective view of one of the two side sheet carrier shafts;

Figure 5 shows in perspective a detail of a forward corner region of the base part with a forward sheet carrier shaft, with the cover part removed;

Figure 6 is a perspective view similar to Figure 5, at the other forward corner of the base part and also with the cover part removed, also showing a side sheet carrier shaft;

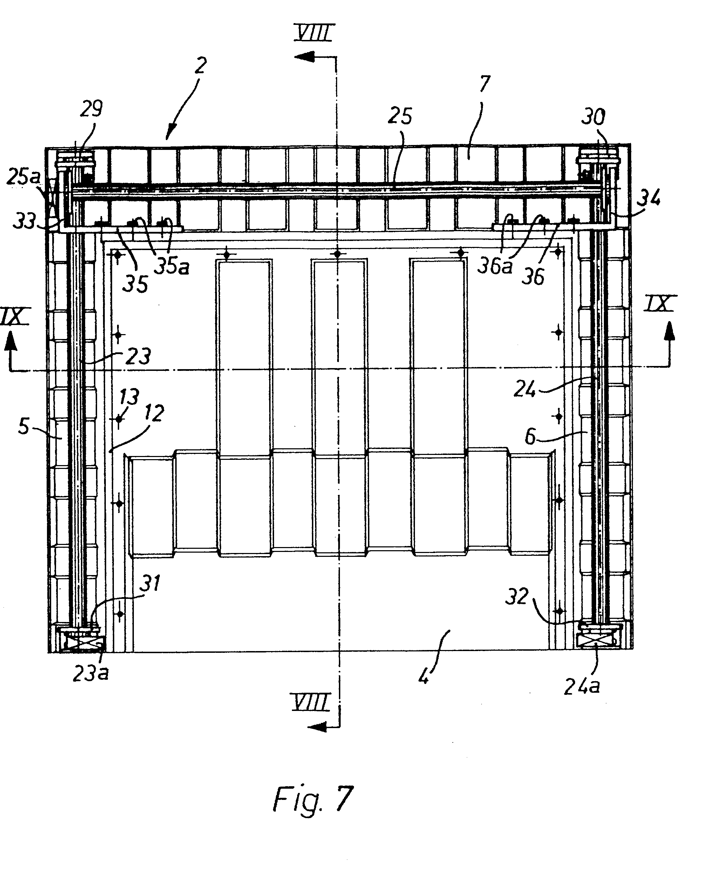

Figure 7 is a plan view of the base part with the three sheet carrier shafts supported thereon;

Figure 8 is a sectional view taken along the line VIII-VIII of Figures 1, 2, 7, with an associated cover part, the protection device being mounted on the roof of a truck driver's cab shown in phantom lines;

Figure 9 is a sectional view taken along the line IX-IX in Figures 1, 2, 7, also with an associated cover part;

Figure 10 is a perspective view of the weather protection covering device as mounted on the roof of a driver's cab of a truck, semitrailer, or the like, with a conventional spoiler being shown in phantom lines;

Figure 11 is a perspective view of the forward side of the driver's cab of a truck, with the forward sheet fully paid off, and specifically before its side flaps are opened;

Figure 12 is a perspective view of a truck driver's cab with the sheets paid off and associated together to form a continuous protective enclosure;

Figure 13 is a general plan view of a variation of the weather protection covering device with four sheet carrier shafts, that is as envisaged for motor cars; and

Figure 14 is a side elevation view of a motor car incorporating the protection device shown in Figure 13, with protection sheets paid off and associated together.

## DESCRIPTION OF PREFERRED EMBODIMENTS

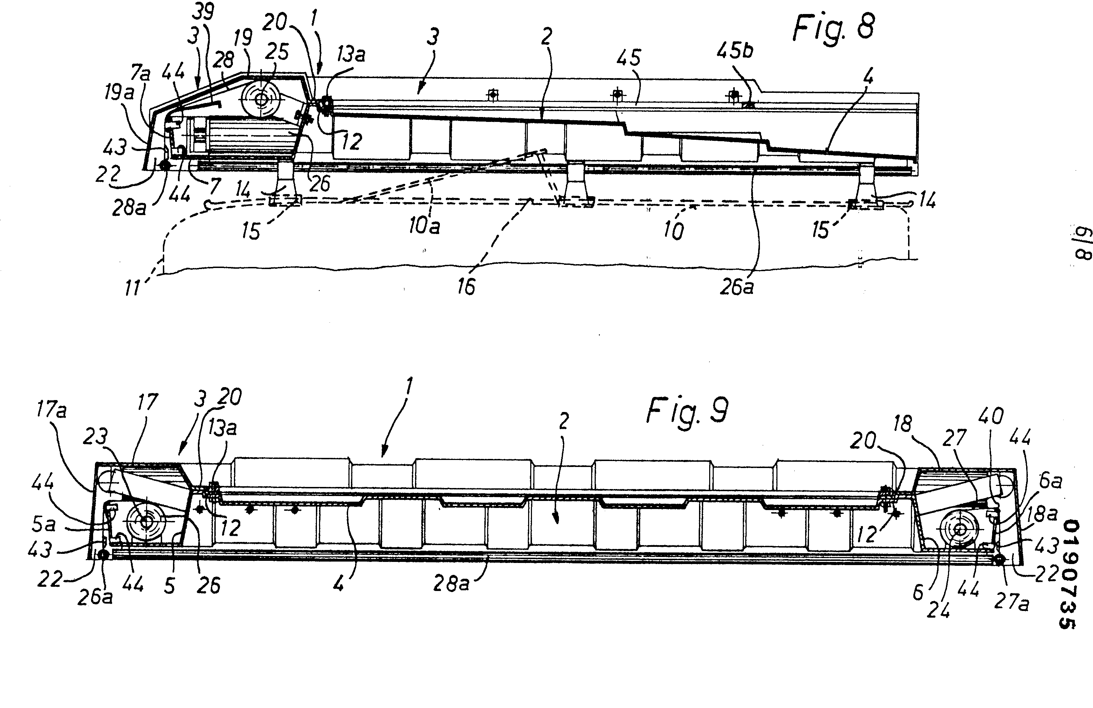

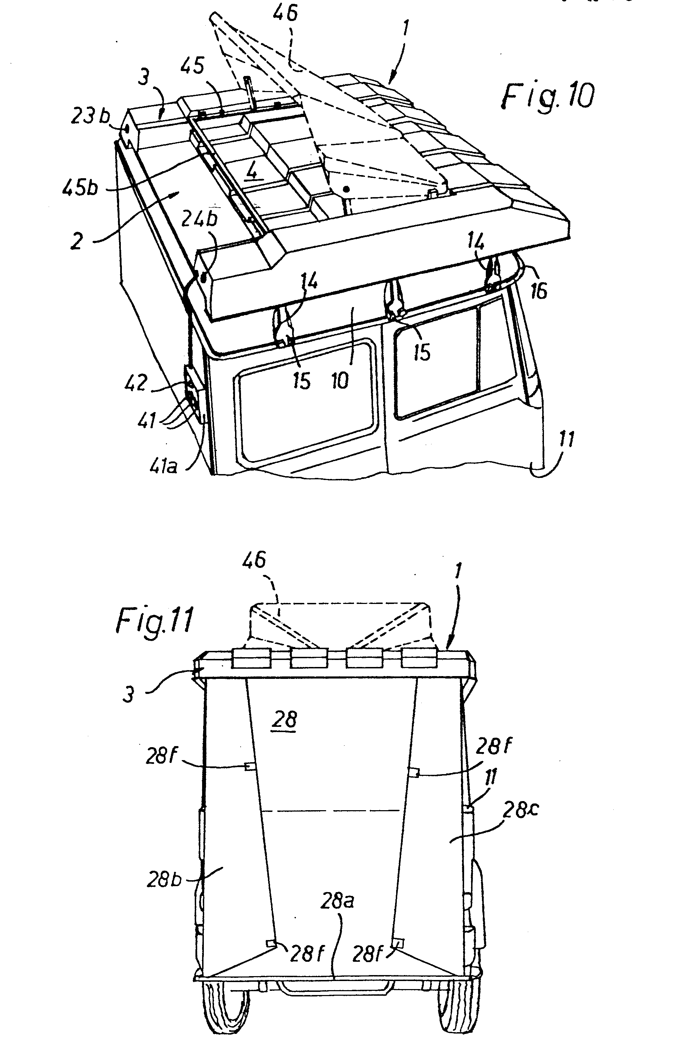

Throughout the drawing figures, drawn to different scales for clarity of illustration, the weather protection covering device of this invention is comprehensively designated 1, Figure 10. It consists substantially of a base part 2 and a cover part 3. The base part 2 has a substantially plate-like configuration which comprises a middle part 4 and three channel-like depressions 5,6 and 7, along three consecutive sides which correspond to the cab sides to be covered, that is to the sides housing the covering sheets, as referred to hereinafter. Such channel-like depressions 5,6 and 7 have, therefore, a substantially gutter-like configuration, there being formed therein stiffening ribs 8. Also provided in the middle part 4 are stiffening ribs 9, which like the ribs 8 can have any configurations and extents. The middle part 4 may also have a staggered shelf configuration to allow unrestricted opening of the air intake hatch 10a, shown in phantom lines in Figure 8, in all cases, as being customarily provided through the roof 10 of a driver's cab 11 of a truck, semitrailer, or the like.

As may be gathered in particular from Figures 8 and 9, the base part 2 has, at its inner side adjacent the channel-like depressions 5,6,7, a flanged region or rib 12, where a plurality of holes 13 are formed for fastening, as by screws 13a, to the cover part 3, as referred to hereinafter. Also associated with with the base part 2 are, in a manner no further shown, supporting feet 14 which have a clamp part 15 for securing them, that is the protection device 1, to the peripheral border 16 of the roof 10 of the cab 11, in a removable way. The cover part 3 also consists preferably of a single piece and has, as viewed in plan view, a U-like shape and an inverted channel cross-sectional shape, the shape whereof may be seen in particular in Figures 8 and 9. The two side legs and the cross side of the cover part 3 are indicated at 17,18 and 19, the same also having peripherally along their inner sides a flanged region or rib 20 which is adapted to be placed to cover the flanged region or rib 12 of the base part 2, and similarly to the latter, is formed with a plurality of coaxial holes 21 with the holes 13, on the cover part 3 being superimposed on the base part 2. The legs 17,18 of the cover 3 and the cross side 19 thereof have, respectively, an outer flange 17a,18a and 19a which form a downwardly open interspace 22 with the respective juxtaposed flanges 7a,5a,6a of the respective channel-like depressions 5,6,7 of the base part. Between the peripheral flanged regions 12 and 20, there is advantageously provided a preferably elastic gasket, no further illustrated.

According to the invention, the parts 2 and 3 are preferably made as a single piece, such as from reinforced plastics, e.g. glass fiber reinforced plastics, or from pressed sheet metal, or the like.

According to the invention, for each of the three

0190735

sides of the cab 11 to be covered, there is provided a respective sheet carrier shaft 23,24 and 25, to which there are respectively secured a sheet 26,27 and 28, in a manner no further explained, such as by gluing, stapling, or the like.

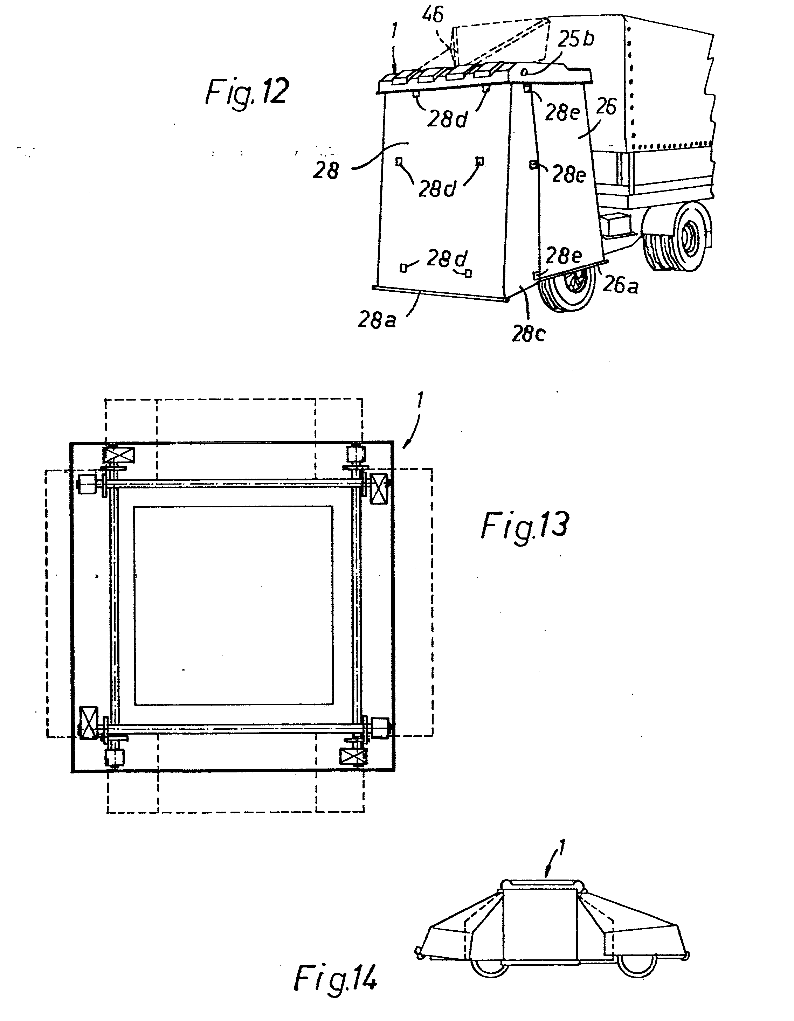

The shafts 23,24 and 25 have, respectively, an associated gear motor 23a,24a and 25a, the output whereof is keyed directly, in a manner no further explained, to the associated cited shaft 23,24 and 25. The side shafts 23,24 are secured to the base part 2 by end bearings, and specifically, at the remote end from the gear motors, by means of a bearing 29,30, and at the end next to the gear motor, by means of a bearing 31,32 attached directly to the associated gear motor 23a,24a. The screw fastening holes in the part 2 are indicated at 29a,30a,31a and 32a. The shaft 25 is instead supported at its ends by legs 33, respectively 34, of bracket-like angle members 35,36 attached to the base part 2 as by screws 35a and 36a. Indicated at 37 are guide disks provided on the sheet carrier shafts 23,24 and 25 to ensure proper positioning of the sheets 26,27 and 28 during taking up and paying off the sheets 26,27 and 28. The sheets 26,27 and 28 have their bottom cross side associated with a respective end bar 26a,27a and 28a for weighting or balasting purposes. The side sheets 26,27 have their longitudinal edges formed into a folded hem for reinforcement, as outlined in phantom lines. The middle sheet 28 has two side flaps 28b and 28c which are folded over , as shown in Figure 11, for taking up and paying off the sheet. In use, that is to cover the vehicle, the same are turned manually outwards and taken to rest onto the respective side sheets 26, 27 and form a practically continuous protection enclosure. To removably attach said sheets to one another, releasable closure means are proposed, advantageously of the band type associable by pressing down and separable by pulling open, known as Velcro, the individual band segments being shown diagramatically in the drawings. It may be seen in Figure 12 that the segments 28d serve to secure the segments 28e thereto, so as to attain proper folding of the outer flaps 28b,28c over the forward middle part of the forward sheet 28, whilst the band segments 28f, Figure 11, provided on the outer side of the flaps 28b,28c of the forward sheet 28, serve to be secured to corresponding bands, no further described, which are provided on side sheets 26,27 for securing said flaps 28b,28c thereto.

For securing the paid-off sheets, that is the protection enclosure formed of the sheets 26,27 and 28 in mutual association, hook elements are useful which are preferably spring-loaded, no further illustrated, and secured to the weighting bars 26a, 27a and 28a, and are hooked to the bottom edge of the body of the cab 11, that is on the bumper thereof or the like.

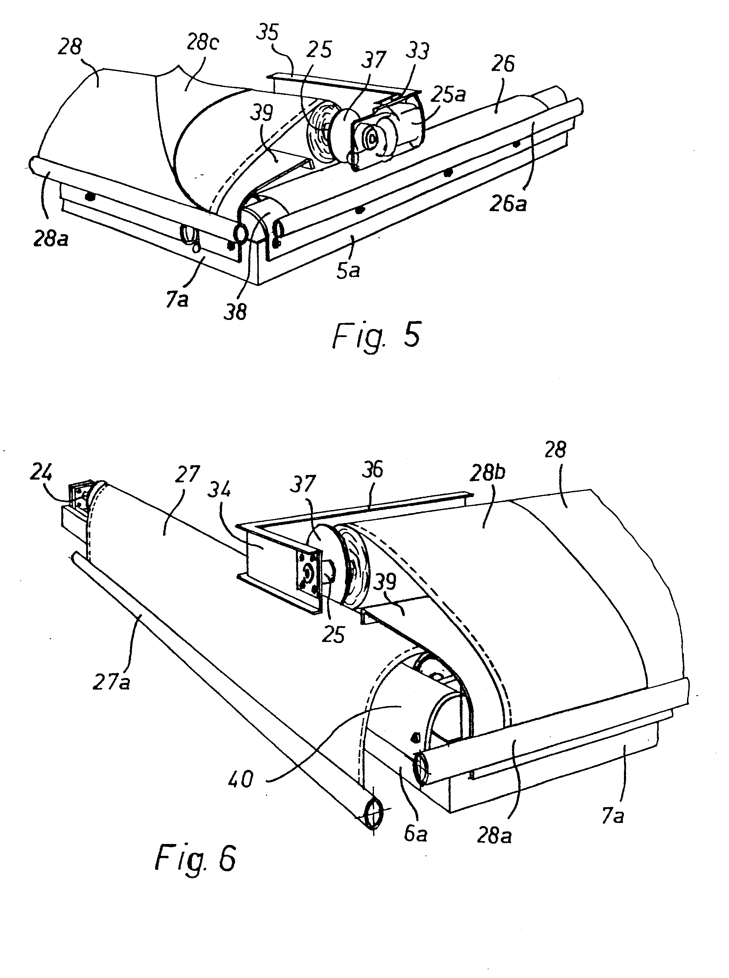

In particular from Figures 5 and 6, sheet-like guide moldings 38,39 and 40 are to be seen which are made fast with the flanges 5a,6a,7a and bridge substantially the gap between said outer flanges 5a, 6a and 7a of the channels 5,6 and 7 and the associated roll formed by the respective taken-up sheet, said moldings having the function of ensuring proper taking up and paying off of the sheets without these distorting transversely, regardless of the vehicle position or inclination.

The gear motors provided are powered from the vehicle-mounted battery, no further shown, through a circuit including known manually controlled electric circuit components, e.g. of the toggle type 41, for switching a respective gear motor to turn in a desired direction , that is to pay off or take up a sheet, as well as to switch it off. Such electric control components 41 are preferably set in a readily accessed control panel 41a, Figure 10, by the driver and having preferably a safety lock 42 the key wherefor would be kept by the driver for safety, that is to prevent unauthorized persons from controlling the sheets take-up or pay-off.

Advantageously, the gear motors also have a manual operation tap, no further illustrated, for manually controlling the same, to be used in the event of a vehicle battery failure. Manual control of the gear motors 23a,24a and 25a is accomplished through a wrench, no further illustrated, fitting over said gear motors through the ports 23b,24b and 25b shown in Figures 10 and 12.

According to the invention, travel limit means are provided which can stop the pay-off or take-up movements of the sheets automatically upon the same reaching respectively their fully paid off position, or fully taken up position. Such travel limit means consist preferably of known electromagnetic switches formed, for each sheet, by small magnetic end plates 43 secured at the sheet ends, and of switch-like electromagnetic circuit components 44, known per se, which are secured to the box-type structure of the device 1 at suitable locations to overlap the cited small magnetic plates 43 with the sheets in their fully extended and withdrawn positions. Such means are no further discussed because already available commercially and in all cases replaceable with functional equivalents thereof.

According to the invention, moreover, an inner supporting frame 45, e.g. formed from sectional metal, is provided which has holes 45a and can be secured to the device 1 by the same screws 13a which connect the base 2 and cover 3 to each other. That frame serves advantageously the purpose of carrying accessory items to be fitted to the roof of the cab 11, such as a spoiler 46, shown in phantom lines, or other objects. The rear rod 45b of the frame 45 may be advantageously utilized to retain objects placed above the middle part 4, e.g. a small box or the like, no further illustrated.

In order to ensure proper rolling of the sheet carrier shafts 23,24 and 25, these may be carried in their end bearing elements, that is be connected to their respective gear motors, advantageously through a plastics bush, e.g. of Teflon, no further illustrated, which additionally to having high strength and low frictional coefficient features, allows for some deflection.

The operation of the weather protection covering device proposed is to be inferred from the foregoing. When the cab 11 is to be covered, i.e. sheltered, in bad weather conditions, e.g. snowfalls, or from sun radiation, it will be sufficient to act on the electric components 41 of the control panel 41a, following consent by unlocking the safety lock 42. As mentioned, the circuit components 41 are advantageously envisaged in the form of a toggle lever which, when swung into one position, causes a respective sheet to be paid off, and when swung into the other position, causes the same to be taken up. That taking up operation will take place, of course, shortly before the vehicle is started, that is at the beginning of a trip. Thus, during a trip, the sheets will be taken up into sheet rolls, as shown in Figures 8 and 9, thereby the proposed device is stowed unobtrusively. The same may be advantageously streamlined in shape, e.g. as schematically shown in the drawings, so that it may act itself as an aerodynamic "spoiler".

The inventive concept discussed hereinabove may be expanded to include a four-shaft quadrangular device, as schematically indicated in Figure 13, arranged to provide covering for the four sides of a motor vehicle, e.g. a motor car as indicated in Figure 14. That construction is quite similar to the above-discussed one, has a single additional sheet carrier shaft, that is a single sheet, whereby all four of the motor car sides can be covered. The quick release closure means, formed advantageously of Velcro band segments, as well as the hooked means for securing the sheets to the car body, are similar to those described above. In view of the structural similarities of this variation to those of the example detailedly discussed hereinabove, a more detailed discussion of this modified embodiment will be omitted. It is only pointed out that the folded over side flaps, as specified in the previous example, are provided on the two forward sheets, as shown in Figure 14.

It may be appreciated from the foregoing that the weather protection covering device according to the invention effectively achieves the objects set forth above, and affords the advantages mentioned in the preamble.

The invention also envisages a single gear motor for operating the sheet carrier shafts provided, and coupling the latter together by means of a respective bevel gear drive. In this case, the take-up and pay-off sheet movements would take place simultaneously.

In practice, all the individual parts may be replaced with technical and/or functional equivalents thereof, without deviating from the protection scope of this invention.

Dimensions and the materials, as well as the geometric configurations of the channel-like portions of the base and cover parts, may be selected as appropriate, without departing from the protective scope of this invention.

All of the features to be inferred from the description, claims, and drawings are regarded as substantial to this invention, either singly or in any combinations thereof.

GORZA Luigi
Via Dante Alighieri, 12
32032 Feltre (Belluno), Italy

CLAIMS

1. A weather protection covering device for truck driver's cabs, characterized in that it comprises:

i. a box-type housing 2, 3 and supporting structure removably attachable to a driver's cab roof 10;

ii. for each of the three cab sides to be covered, a sheet carrier shaft 23, 24, 25, said shaft being supported on said box-type structure 2, 3, carrying a covering sheet 26, 27, 28, and being associated with a respective reversible gear motor 23a, 24a, 25a powered by the vehicle battery and being associated with known manually controlled circuit components 41 for operating the gear motor 23a, 24a, 25a in a desired direction of rotation and for turning it off;

iii. travel limit means 42, 44 adapted to automatically stop the covering sheets 26, 27, 28 at their end take-up and pay-off positions;

iv. removable association means between said covering sheets 26, 27, 28, to connect together said paid-off sheets 26, 27, 28 so as to form a protective enclosure, that is to undo said protective enclosure into its individual sheets 26, 27, 28 for taking them up;

v. means of fastening said covering sheets 26, 27, 28 releasably in their paid-off positions, for securing them to the vehicle body, that is for their detachment from the vehicle body and subsequent taking up.

2. A weather protection covering device according to Claim 1, wherein the box-type structure 2, 3 comprises:

i. a substantially plate-like base part 2 having a channel-like depression 5, 6, 7 formed along three consecutive sides corresponding to the three cab sides to be covered; and

ii. a cover part 3, also having an inverted channel cross-sectional shape, with a U-like plan shape 17, 18, 19, that is overlapping said channel depression 5, 6, 7 along the three consecutive sides of the base part 2, the outer peripheral side 17a, 18a, 19a of the cover 3 forming an interspace 22 with the corresponding adjacent outer perpheral side 5a, 6a, 7a. of the base part 2, for accomodating and letting through the covering sheets 26, 27, 28, and wherein the base and cover parts 2, 3 are each provided, on their inner peripheral channel portion, with a flanged region 12, 20, confronting one another in overlapping relationship and accommodating preferably an elastic gasket, said flanged regions 12, 20 being formed with holes 13, 21 for screws 13a locking together said base and cover parts 2, 3.

3. A weather protection covering device according to Claim 1, wherein the base and the cover parts 2, 3 of the box-type structure are provided with strengthening ribs 8, 9.

4. A weather protection covering device according to Claim 1, wherein each sheet carrier shaft 23, 24, 25 is secured to the base part 2 through and bearings 29, 30, 31, 32, 35, 36, and specifically on one side, directly by means of an end bearing 29, 30, 34, and on the other side, by means of an end bearing 31, 32, 35 with the interposition of the associated gear motor 23a, 24a, 25a, the output wherof is connected to said sheet carrier shaft 23, 24, 25, said gear motors 23a, 24a, 25a also having a fitting for a wrench-like hand tool for manually operating said gear motors 23a, 24a, 25a in an emergency to manually take up and pay off a sheet 26, 27, 28.

5. A weather protection covering device according to Claim, wherein the travel limit means 43, 44 for automatically stopping the sheets 26, 27, 28 comprise, for each sheet, magnetic end plates 43 cooperating in juxtaposition with electromagnetic circuit components 44 known per se and attached to said base part 2 and effective to bring the respective gear motor 23a, 24a, 25a to a stop.

6. A weather protection covering device according to Claim 1, wherein said releasable association means between the sheets 26, 27, 28 comprise mutually associable pull-open band segments 28d, 28e, 28b, that is of the Velcro band type, which are arranged on the sheets 26, 27, 28 at mutually overlapping locations with the sheets 26, 27, 28 paid off and overlapping one another.

7. A weather protection covering device according to Claim 1, wherein said releasable fastening means between the covering sheets 26, 27, 28 and the vehicle body comprise preferably spring-loaded, that is elastic, hooked elements for attachment to the vehicle body, that is to the vehicle bumper.

8. A weather protection covering device according to Claim 1, wherein the covering sheets 26, 27, 28 have their free cross edges provided with a weighting rod 26a, 27a, 28a and a length reaching, in the paid-off state, substantially below the vehicle cab 11, the side edges of said sheets having a reinforcing hemmed edge.

9. A weather protection covering device according to Claim 1, wherein associated with the box-type structure 2, 3 is an inner frame 45 for supporting a spoiler 46 or the like, and for holding loads placed on said box-type structure 2, 3 of the device.

10. A weather protection covering device according to Claim 1, wherein, between the sheet carrier shafts 23, 24, 25 and the respective associated edge 5a, 6a, 7a of said base part 2 of the boxe-type structure 2, 3, there is respectively located a guide molding 38, 39, 40 for properly locating the sheet 26, 27, 28 as it is being paid off and taken up.

Fig.1

*Fig. 2*

45    45b

45a    45a

## Fig. 3

29,30

23,24

37

31,32    23a,24a

## Fig. 4

Fig. 5

Fig. 6

Fig. 7

Fig. 8

Fig. 9

0190735

Fig. 10

Fig. 11

*Fig.12*

*Fig.13*

*Fig.14*